# EUROPÄISCHE PATENTSCHRIFT

(11) **EP 0 286 190 B1**
(45) Veröffentlichungstag und Bekanntmachung des Hinweises auf die Patenterteilung: **13.01.1993**
(21) Anmeldenummer: 88200647.1
(22) Anmeldetag: 06.04.1988
(51) Int. Cl.: G02B 6/38

(54) **Mit einer Halterung verklebtes Verbindungsende eines Lichtwellenleiters**
Connection end of a light-guide glued on a mount
Fin de connexion d'un guide d'ondes lumineuses collé sur un support

(30) Priorität: 09.04.1987 DE 3711966
(43) Veröffentlichungstag der Anmeldung: 12.10.1988
(73) Patentinhaber: Philips Patentverwaltung GmbH, 22335 Hamburg (DE); Philips Electronics N.V., 5621 BA Eindhoven (NL)
(72) Erfinder: Grzesik, Ulrich, Dr., D-5060 Bergisch Gladbach 2 (DE); Schürmann, Erich, Dr., D-4415 Sendenhorst (DE)
(74) Vertreter: Koch, Ingo

(56) Entgegenhaltungen:
- US-A- 4 079 927
- PATENT ABSTRACTS OF JAPAN, Band 3, Nr. 22 (E-93), Seite 50 E93, 24. Februar 1979; & JP - A - 54 647
- PATENT ABSTRACTS OF JAPAN, Band 3, Nr. 159 (E-162), Seite 80 E 162, 27. Dezember 1979; & JP - A - 54 139 565

## Beschreibung

Die Erfindung bezieht sich auf ein Steckerelement mit
- einem aus Kern, Mantel und Schutzumhüllung bestehenden Lichtwellenleiter (LWL), dessen Schutzumhüllung am Verbindungsende über den Umfang zumindest teilweise entfernt ist,
- einem Gehäuse mit einer Führungsrinne in welche das Verbindungsende des Lichtwellenleiters mit seinem von der Schutzumhüllung befreiten Umfangsbereich in der Weise eingelegt ist, daß die Längsachse des Lichtwellenleiters parallel zur Führungsrinne verläuft,
- einer Halterung, die so zum Gehäuse angeordnet ist, daß sie mit mindestens einer ihrer Flächen an einem über die Führungsrinne hinausragenden Umfangsbereich des Lichtwellenleiters anliegt,
- einem elastischen Element zur Fixierung des Verbindungsendes im Steckerelement.

Bei einer beispielsweise durch Electronic Letters 1974, Vol. 10, No. 14, Seite 280 bekannten Anordnung ist die Halterung ein das Verbindungsende des LWL zentrisch aufnehmender zylindrischer Körper, dessen Außenfläche als Zentrierfläche genau bearbeitet werden muß, da einerseits der Außendurchmesser genau eingehalten werden muß und da andererseits kein Mittenversatz zum LWL vorhanden sein darf.

Ein Steckerelement der eingangs genannten Art ist durch die EP-A-002 9512 bekannt.

Der Erfindung liegt die Aufgabe zugrunde, eine Anordnung der eingangs genannten Art derart zu gestalten, daß das Verbindungsende des Lichtwellenleiters im Gehäuse zuverlässig festgelegt ist.

Die Lösung gelingt dadurch, daß das Verbindungsende des Lichtwellenleiters mit der Halterung verklebt ist, daß die Halterung über Federelemente in der Weise am Gehäuse angeordnet ist, daß das Verbindungsende in die Führungsrinne des Gehäuses gedrückt und somit relativ zum Gehäuse justiert ist.

Ein LWL hat einen vorzugsweise aus dotiertem Quarzglas bestehenden lichtleitenden Kern, welcher von einer ebenfalls vorzugsweise aus Quarzglas bestehenden Mantelschicht umgeben ist, deren Brechungsindex niedriger als der Brechungsindex des Kerns ist. Unmittelbar nach dem Ziehen des LWL aus einer Vorform wird eine Schutzumhüllung (Primär-Coating) aufgebracht, welche aus einem sehr viel weicheren Material als die Mantelschicht des LWL besteht, insbesondere aus UV-gehärtetem Kunststoff.

Es wurde festgestellt, daß der Außenumfang der Mantelschicht eines aus einer Vorform gezogenen LWL sehr genau konzentrisch zur Mittelachse des Kerns des LWL verläuft, so daß die Außenfläche der Mantelschicht selbst im Falle von Monomode-LWL sehr gut als Zentrierfläche für die Herstellung von Steckverbindungen geeignet ist.

Bei der erfindungsgemäßen Anordnung dienen zur zentrierenden Führung von der Schutzumhüllung freigelegte Bereiche der Mantelschicht des LEL. Deshalb sind zur Ausbildung genauer Zentrierflächen keinerlei aufwendige Bearbeitungsvorgänge erforderlich. Dennoch ist das Verbindungsende des LWL wegen der mit ihm fest verbundenen Halterung einfach und sicher handhabbar, im Gegensatz zu solchen bekannten Ausführungen, bei welchen vollständig von der Schutzumhüllung befreite Verbindungsenden unmittelbar in Führungsrinnen eines Justierelements eingefädelt werden müssen, wobei eine Beschädigung der LWL nicht ausgeschlossen werden kann.

Gemäß einer bevorzugten Ausführung Ausführungsform ist vorgesehen, daß das Verbindungsende des LWL über die auf der Mantelschicht aufgebrachten Schutzumhüllung (Primär-Coating) an die Halterung geklebt ist, und daß die Zentrierflächen nach dem Verkleben durch Entfernen der Schutzumhüllung an mindestens zwei Umfangsbereichen des LWL hergestellt sind. Eine Verklebung der Halterung mit der Schutzumhüllung ergibt eine besonders zuverlässige Haftwirkung. Einerseits ist der Durchmesser der Schutzumhüllung größer als derjenige der Mantelschicht. Andererseits ergibt sich eine gute Klebehaftung am Kunststoff der Schutzumhüllung, welche besser ist als eine Verklebung mit dem Quarzglas der Mantelschicht des LWL. Die erst nach dem Verkleben erfolgende Herstellung der Zentrierflächen ergibt den Vorteil, daß das Verbindungsende des LWL bereits sicher und gut handhabbar durch die Halterung geschützt ist.

Gegenüber einer Entfernung der Schutzumhüllung mittels chemischer Verfahren wird vorgezogen, daß die Schutzumhüllung durch ein Schneidewerkzeug entfernt ist, dessen Härte kleiner als diejenige der Mantelschicht und größer als diejenige der Schutzumhüllung ist. Dann kann die Klebstelle nicht durch Lösungsmittel beeinträchtigt werden. Darüberhinaus kann das weichere Material des Schneidewerkzeuges die Oberfläche der Mantelschicht nicht beschädigen. Das Schneidewerkzeug darf, da es ja weicher als Quarzglas ist, mit einer gewissen Kraft angedrückt werden. Dabei passen sich seine Schneiden auf einem gewissen Bereich der Oberfläche der Mantelschicht elastisch an, so daß dort streifenförmige Zonen der Mantelschicht freigelegt werden. Besonders geeignet sind Werkzeuge mit etwa V-förmig zueinander geneigten Schneiden, welche einen Winkel miteinander bilden, welcher etwas kleiner als der einer prismatischen Führungsrinne ist. Dann werden mit einem einzigen Schneidevorgang zwei Umfangsbereiche der Mantelschicht freigelegt, welche als Zentrierflächen an die Winkelflächen der prismatischen Führungsrinne angelegt werden sollen.

Da eine zylindrisch glatte Form der Halterung nicht mehr erforderlich ist, kann in Weiterbildung der Erfindung vorgesehen sein, daß die Halterung Zentrierflächen zur Grobausrichtung gegenüber einem Justierelement aufweist, so daß ein leichteres gezieltes Hinführen des Verbindungsendes des LWL in eine Führungsrinne möglich ist.

Darüberhinaus ist es vorteilhaft möglich, daß die Halterung einstückig integrierte Federelemente aufweist, über welche sie an zugeordnete Halteflächen eines Justierelements und/oder eines Gehäuses für das Justierelement in der Weise anliegt, daß der LWL federnd in die Führungsrinne des Justierelements gedrückt und/oder axial federnd gegen die Stirnfläche eines mit ihm zu verbindenden Verbindungsendes eines weiteren LWL gedrückt ist. Dann erfüllt die Halterung als einheitliches Bauelement mehrere Funktionen, so daß eine einfach aufgebaute Steckeinrichtung ermöglicht wird.

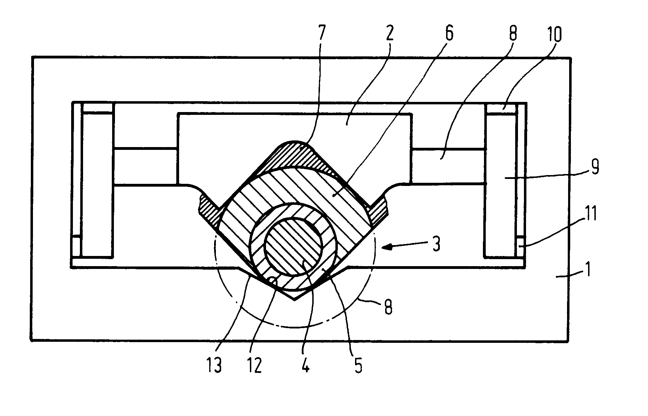

Die Erfindung wird anhand der Beschreibung eines in der Zeichnung schematisch dargestellten vorteilhaften Ausführungsbeispiels näher erläutert.

Die Figur zeigt eine Ansicht auf das Ende einer erfindungsgemäßen Halterung, wobei der angeklebte LWL im Schnitt gezeichnet ist.

Mit 1 ist ein kastenförmiges Gehäuse bezeichnet, in dessen offenen Stirnseiten je eine Halterung 2 mit daran geklebtem Ende eines LWL 3 einschiebbar ist.

Der optisch wirksame Teil des LWL 3 besteht aus einem Kern 4 und einer umgebenden Mantelschicht 5, welche beide aus gegebenenfalls dotiertem relativ hartem Quarzglas bestehen.

Der LWL 3 wurde mit der ihn allseitig umgebenden Schutzumhüllung 6 (Kreis 8) mittels Kleber 7 an die Halterung 2 geklebt. Erst danach wurden die nicht schraffierten Teile der Schutzumhüllung, welche unterhalb des strichpunktiert gezeichneten Bogens des Kreises 8 lagen, weggeschnitten. Dazu wurde ein Schneidewerkzeug mit V-förmig zueinander geneigten Schneiden benutzt, dessen Härte größer als die des Kunststoffs der Schutzumhüllung und wesentlich kleiner als diejenige von Quarzglas war. Die Schneiden wurden mit spitzem Winkel zur LWL-Achse angesetzt, mit einer definierten Kraft gegen den LWL gedrückt und dann in dessen Längsrichtung gezogen, so daß die gewünschten Bereiche der Schutzumhüllung 6 spanend abgehoben wurden. Da das Material der Schneiden des Schabewerkzeugs wesentlich weicher als Quarzglas war, wurde die Mantelschicht des LWL 3 nicht beschädigt. Durch elastische Verformung paßte sich die Kontur der Schneiden auf einem begrenzten Winkelbereich der Außenkontur der Mantelschicht 5 an, so daß der in der Figur erkennbare Bereich sauber entfernt wurde.

Am Tragelement 2 sind beidseitig über je zwei Federstifte 8 Führungselemente 9 angeformt, welche über Einführungsschrägen aufweisende Abschnitte 10 und 11 gleitfähig an Innenflächen des Gehäuses anliegen. Dabei sind die Abschnitte 10 elastisch ausgelenkt, so daß die Zentrierflächen der Mantelschicht 5 mit vorgegebener Andruckkraft an die Winkelflächen 13 der Führungsrinne gedrückt sind. Die Federstifte sind in der Lage, auch die Federkraft aufzubringen, welche für die Aneinanderpressung der Stirnflächen des LWL 3 mit der Stirnfläche eines korrespondierenden weiteren LWL erforderlich ist.

Selbstverständlich können Rastelemente zur Fixierung der Einstellage der Führungselemente 9 im Gehäuse 1 sowie Gleitführungen in der Art vorgesehen sein, daß der LWL 3 erst kurz vor dem Erreichen seiner Endlage an die Flächen 13 der Führungsrinne gedrückt wird. Dem Fachmann sind derartige konstruktive Gestaltungen, wie sie beispielsweise in ähnlicher Form durch die DE-PS 28 05 949 bekannt sind, geläufig.

## Patentansprüche

1. Steckerelement mit
- einem aus Kern (4), Mantel (5) und Schutzumhüllung (6) bestehenden Lichtwellenleiter (LWL 3), dessen Schutzumhüllung (6) am Verbindungsende über den Umfang zumindest teilweise entfernt ist,
- einem Gehäuse (1) mit einer Führungsrinne (Flächen 13), in welche das Verbindungsende des Lichtwellenleiters (3) mit seinem von der Schutzumhüllung (6) befreiten Umfangsbereich in der Weise eingelegt ist, daß die Längsachse des Lichtwellenleiters (3) parallel zur Führungsrinne (Flächen 13) verläuft,
- einer Halterung (2) , die so zum Gehäuse (1) angeordnet ist, daß sie mit mindestens einer ihrer Flächen an einem über die Führungsrinnen (Flächen 13) hinausragenden Umfangsbereich des Lichtwellenleiters (3) anliegt,
- einem elastischen Element (8) zur Fixierung des Verbindungsendes im Steckerelement,
dadurch gekennzeichnet, daß das Verbindungsende des Lichtwellenleiters (3) mit der Halterung (2) verklebt ist, daß die Halterung (2) über Federelemente (8) in der Weise am Gehäuse (1) angeordnet ist, daß das Verbindungsende in die Führungsrinne (Flächen 13) des Gehäuses gedrückt und somit relativ zum Gehäuse (1) justiert ist.

2. Steckerelement nach Anspruch 1,
dadurch gekennzeichnet, daß die Halterung (2) Zentrierelemente (9) zur Grobausrichtung gegenüber der Führungsrinne (Flächen 13) aufweist.

3. Steckerelement nach Anspruch 1 oder 2,
dadurch gekennzeichnet, daß die Federelemente (8) an die Halterung (2) integriert sind.

## Claims

1. A connector element, comprising
- a light waveguide (LWG3) consisting of a core (4), a cladding (5) and a protective coating (6) which is at least partly removed over its circumference at the connection end,
- a housing (1) having a guide groove (surfaces 13) in which the connection end of the light waveguide (3) having its circumferential area exposed by the protective coating (6) is accommodated in such a way that the longitudinal axis of the light waveguide (3) extends parallel to the guide groove (surfaces 13),
- a holder (2) which is arranged relative to the housing (1) in such a way that at least one of its faces engages a circumferential area of the light waveguide (3) projecting beyond the guide groove (surfaces 13),
- an elastic element (8) for securing the connection end in the connector element,
characterized in that the connection end of the light waveguide (3) is bonded to the holder (2), in that the holder (2) is arranged relative to the housing (1) *via* resilient elements (8) in such a way that the connection end is pressed into the guide groove (surfaces 13) and is thus adjusted relative to the housing 1.

2. A connection element as claimed in Claim 1, characterized in that the holder (2) comprises centring elements (9) for the coarse alignment with respect to the guide groove (surfaces 13).

3. A connector element as claimed in Claim 1 or 2, characterized in that the resilient elements (8) are integrated with the holder (2).

## Revendications

1. Elément de fiche comportant
- un guide de lumière (3) constitué d'un coeur (4), d'une gaine (5) et d'une enveloppe protectrice (6) qui est enlevée, du moins partiellement, sur la circonférence de l'extrémité de connexion,
- un boîtier (1) comportant une gorge de guidage (surfaces 13) dans laquelle est disposée l'extrémité de connexion du guide de lumière (3) avec sa zone circonférentielle exempte de l'enveloppe protectrice (6) de manière que l'axe longitudinal du guide de lumière (3) s'étend parallèlement à la gorge de guidage (surfaces 13),
- un dispositif de serrage (2) fixé au boîtier (1) de manière à être appuyé au moins avec l'une de ses surfaces contre une zone circonférentielle du guide de lumière (3) dépassant les gorges de guidage (surfaces 13),
- un élément élastique (8) pour fixer l'extrémité de connexion dans l'élément de fiche,
caractérisé en ce que l'extrémité de connexion du guide de lumière (3) est fixée par une colle au dispositif de serrage (2), en ce que le dispositif de serrage (2) est fixé au boîtier (1) par l'intermédiaire d'éléments élastiques (8) de manière que l'extrémité de connexion est serrée dans la gorge de guidage (surfaces 13) et en ce que, par conséquent, elle est ajustée par rapport au boîtier (1).

2. Elément de fiche selon la revendication 1, caractérisé en ce que le dispositif de serrage (2) présente des éléments de centrage (9) pour un ajustage provisoire par rapport à la gorge de guidage (surfaces 13).

3. Elément de fiche selon la revendication 1 ou 2, caractérisé en ce que les éléments flexibles (8) sont intégrés au dispositif de serrage (2).
